Europäisches Patentamt

European Patent Office

Office européen des brevets

(19)

(11) Publication number: **0 147 003**

**A1**

(12) **EUROPEAN PATENT APPLICATION**

(21) Application number: **84305008.9**

(22) Date of filing: **24.07.84**

(51) Int. Cl.⁴: **G 11 B 5/31**

(30) Priority: **28.11.83 US 555504**

(43) Date of publication of application:
**03.07.85 Bulletin 85/27**

(84) Designated Contracting States:
**DE FR GB**

(71) Applicant: **FERIX CORPORATION**
**48571 Milmont Drive**
**Fremont California(US)**

(72) Inventor: **Springer, Gilbert D.**
**549 Torland Court**
**Sunnyvale California(US)**

(74) Representative: **Wombwell, Francis et al,**
**Potts, Kerr & Co. 15, Hamilton Square**
**Birkenhead Merseyside L41 6BR(GB)**

(54) **Thin-film magnetic read/write head with multiple-layer coil.**

(57) An electromagnetic read/write head (10) is disclosed having pole portions, including a web (12) and a blanket (27) extending over one side of the web, disposed in a magnetically gapped manner. When excited, the pole portions form a pair of opposite polarity magnetic poles. A plurality of electrically conductive spiral coils (18, 20) are sandwiched in generally parallel relationship between the pole portions in series or parallel electrical configuration for exciting cooperatively the pole portions.

FIG.1

FIG.2

- 1 -

## THIN-FILM MAGNETIC READ/WRITE HEAD

## WITH MULTIPLE-LAYER COIL

### Background and Summary of the Invention

This invention pertains to a thin-film electromagnetic read/write head. In particular, it pertains to such a head having a plurality of electrical coils sandwiched between a pair of pole portions excitable to produce a pair of magnetically spaced opposite polarity magnetic poles.

It is a generally universal objective in thin-film electromagnetic read/write head engineering to try to design heads with maximum magnetomotive force for reading from and writing onto a magnetic image-storage medium for a given drive current. The heads contemplated and discussed in the following description relate to magnetic writing heads of the types disclosed in my prior U.S. patent applications, Serial No. 170,788, entitled "Magnetic Imaging Apparatus" (filed July 21, 1980), and Serial No. 472,924, entitled "Differential Permeability Field-Concentrating Magnetic Read/Write Head" (filed March 7, 1983) a continuation of Serial No. 381,922 (filed May 26, 1982). These applications describe the construction of a head having concentric poles forming an annular read/write gap and a flux-inducing electric coil generally concentrically surrounding the poles.

These and other thin-film head designs generally provide for a planarly disposed exciting coil sandwiched between a pair of magnetic layers for inducing magnetic flux in those layers, which flux is conducted to a read/write gap. Some modifications have been made to such heads to increase the amount of flux produced per unit of drive current. One such modification is the use of an elliptical coil to intensify the flux produced at the pole gap. Another way that such heads are typically improved is to increase the number of turns within a coil. This obviously requires that the head size be increased

in order to accommodate the additional coil windings. This has been found to improve satisfactorily the performance of such a head. However, the increased size of the head requires an increase in the spacing between heads disposed in an array. With the increased spacing there is also an increase in the amount of memory required in order to operate the heads sequentially properly relative to an image-storage medium traveling beneath the head array assembly.

When heads are constructed in a fixed array there are also problems with inconsistencies in thin-film manufacturing processes. There are thus occasionally heads having coils which are non-operative, thereby making the head array in which it is assembled also non-functional as a unit.

It is therefore a desired objective of my present invention to overcome some of these disadvantages of current thin-film construction.

More specifically, it is desired to provide a head which has a greater magnetomotive force generated for a given driving current without increasing the size of the head in the plane of the head.

It is also an objective to provide a head which has redundancy in coil construction so that a defect in an electrical coil will not prevent the head from operating.

Thus, an overall objective is to provide an improved head having improved efficiency of operation.

An electromagnetic read/write head as contemplated in my present invention provides for a second, although not necessarily identical, coil sandwiched along with a first coil between the magnetic conductive layers in a thin-film head. These coils are appropriately wound and connected to provide cooperatively an increase in flux generation for a given level of exciting current. Such coils, if wound in electrically parallel configuration provide for redundancy in the coils.

Thus, one coil could be inoperative without decreasing the effectiveness of the head. Additionally, redundancy can be attained by providing coils which are appropriately wound in a series configuration with opposite electrical polarities applied to the two coils relative to the common joined interconnection of the coils.

These and additional objects and advantages of the present invention will be more clearly understood from a consideration of the drawings and the following detailed description of a preferred embodiment and of alternatives thereto.

### Brief Description of the Drawings

Fig. 1 is a cross-sectional view of a preferred embodiment of a magnetic read/write head as contemplated by this invention.    Fig. 2 is a conceptualized perspective illustrating the general coil configuration of the head of Fig. 1.

Fig. 3 is a cross-sectional view of a second embodiment.    Fig. 4 is a conceptualized perspective of the coil configuration of the head of Fig. 3.

Fig. 5 is a cross-sectional view of even a third embodiment.

Fig. 6 is a conceptualized perspective of the coil configuration of the head of Fig. 5.

### Detailed Description of the Invention

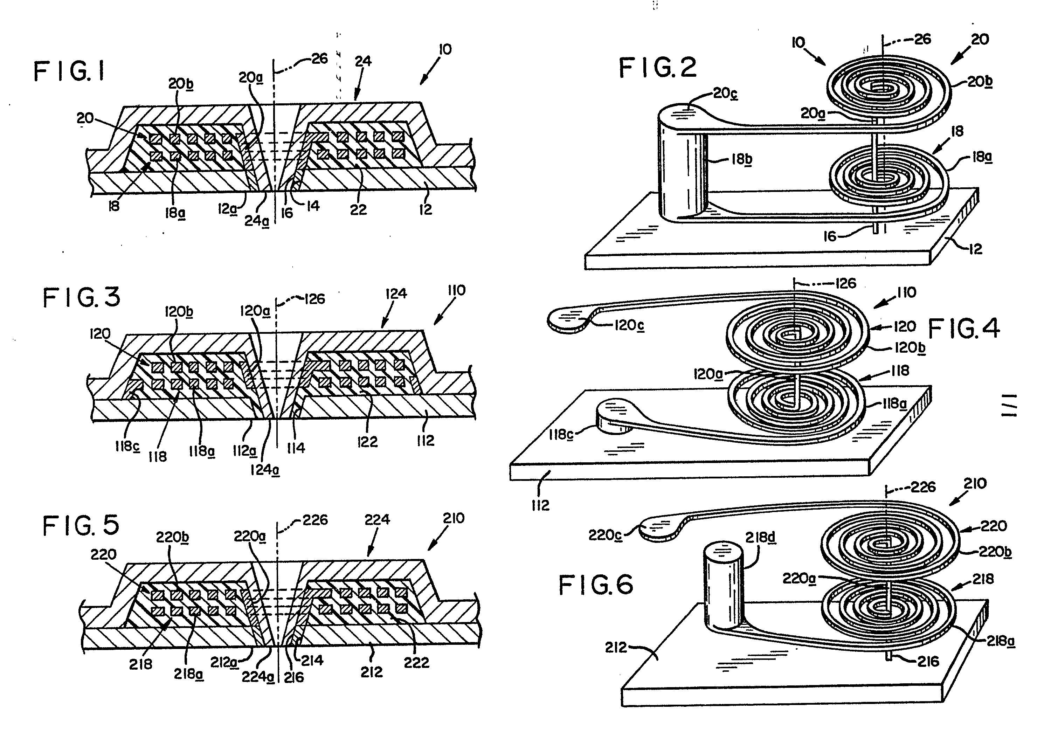

Referring initially to Fig. 1, a preferred embodiment of a read/write head made according to this invention is shown generally at 10. Head 10 is made, using thin-film techniques, substantially similar to certain of the heads previously described in my above-identified U.S. patent applications. Each head has what might be thought of as a pancake-sandwich construction. When viewed from the point of view of the top side of Fig. 1, as illustrated in the perspective of Fig. 2, each head has a generally circular outline. A lower magnetic layer or web 12, also referred to as a first pole portion, is formed of a suitable electrically conductive, high-permeability magnetic material, such as 2826 MB Metglas ($Fe_{40}Ni_{38}Mo_4B_{18}$) and 2605 SE Metglas ($Fe_{81}B_{13.5}Si_{3.5}C_2$), manufactured by Allied Chemical Company.

Provided in web 12 is a tapered annular aperture 14 which opens to both upper and lower faces of the web. The lower face of web 12 around aperture 14 forms a magnetic pole 12a. Formed within aperture 14, and distributed about the wall therein, is a gold collar 16. Collar 16 also functions as as diamagnetic material as well as an electrical conductor, which, as can be seen, is in electrical contact with web 12.

A pair of current-carrying electric conductors, shown generally at 18, 20, includes a copper cup 20a which electrically contacts the upper end of collar 16. Head 10 may alternatively be onstructed with cup 20a extending down in aperture 14 in place of collar 16. Also included in conductors 18, 20 and contacting integrally with cup 20a are a lower spiral coil 18a and an upper spiral coil 20b, respectively. These coils are also referred to as sprial coil means. Coils 18a, 20b are disposed substantially symmetrically about aperture 14. As can be seen, the coils are substantially planar and mutually parallel and lie in planes spaced above the top surface of web 14.

The coils are embedded and supported in a layer 22 of a suitable dielectric material, such as Pyralin or Polyimid, as described in my above-referenced prior applications.

Completing a description of head 10, formed over the parts already described is a blanket 24 of a high permeability but non-electrically conductive magnetic material, such as permalloy. Blanket 24, also referred to as a second pole portion, extends in a fairly uniform layer over layer 22 and downwardly into cup 20$\underline{a}$ and into the inside of collar 18. Blanket 24, at the point where it extends to the lower portion of aperture 14, is flush with the lower face or surface of web 12, forming an inner pole 24$\underline{a}$. In this embodiment, web 12 and blanket 24 are suitably connected magnetically in the outer regions beyond the periphery of conductors 18, 20. The web and blanket cooperate to form what is also referred to as pole means.

Having general circumferential symmetry about about aperture 14, head 10 may be considered to have an axis of symmetry 26, shown in dash-double-dot lines, which axis also serves as an axis of curvature for coils 18$\underline{a}$, 20$\underline{b}$.

Referring now to Fig. 2, the configuration of conductors 18, 20 relative to web 12 is more clearly illustrated. Reference numbers used in Fig. 2 identify corresponding items in Fig. 1. Although the corresponding items are not shown in all cases with the same physical structure, their function is substantially the same.

A pair of terminal connectors 18$\underline{b}$, 20$\underline{c}$ have been added to Fig. 2 which were not shown in Fig. 1. The actual terminal connections are similar to those shown in Fig. 2. A column of electrically conductive material is included in the terminal ends of conductors 18, 20 in order to electrically connect them together.

In operation, a common driving voltage is applied to the terminal pad. Web 12 is grounded. This provides for parallel operation of coils 18$\underline{a}$, 20$\underline{b}$. As can be seen, the coils turn in the same direction when viewed along axis 26, and the current flows in the same direction in both coils. Thus, the flux induced in each of the the coils flows through blanket 24 and web 12 in the same direction. They are therefore additive. However, since the current is theoretically divided equally between the two coils, each coil contributes half the flux that a single coil produces for the same amount of total current.

Referring now to Fig. 3, a head of similar construction to that shown and described in Fig. 1 is presented as a second embodiment. However, the head of Fig. 3 has two coils which are connected electrically in series. Because of the substantial similarity between the heads, the reference numbers relating to Figs. 1 and 2 are used in Figs. 3 and 4 with a "1" in front of those reference numbers to make them 100 higher. As an example, axis 126 in Figs. 3 and 4 is analagous to axis 26 in Fig. 1.

The head of Fig. 3 differs from the head of Fig. 1 in that whereas conductor 18 had a terminal connector connected to terminal pad 20c, it is replaced in the head of Fig. 3 with a grounding pad 118c which electrically contacts web 112.

A collar corresponding to collar 16 or its equivalent does not exist in the head of Fig. 3. In place of such a collar pacivation layer 222 extends down into the same space to prevent electrical contact between the inner ends of coils 118a, 120b with web 112. Cup 120a also differs in that it is limited to strictly connecting the inner ends of coils 118a, 120b together.

The electrical circuit path provided by this configuration extends from terminal pad 120c, through coil 120b, down cup 120a, through the other coil 118a and out to grounding pad ring 118c which is connected to web 112.

As viewed from the top of Fig 4, along axis 126, it can be seen that, in order to obtain cooperating flux contributions from the two coils, again current must flow in the same direction in the coils. Thus, as viewed from the top of Fig. 4, coil 118a curves in a clockwise direction with increasing distance from axis 126 as was the case with reference to the head of Figs. 1, 2. Similarly viewed, coil 120b has a counterclockwise curvature. Thus, the two coils induce flux flow within head 10 in the same direction. In operation current flows in the two coils about axis 26 in the same clockwise or counterclockwise direction.

Referring finally to the third embodiment of my invention, as shown with particular reference to Figs. 5, 6, a head 210 is shown with the coils in series. Consistent with the numbering scheme applied with reference with the second embodiment as compared to the first, the reference numbers used in Figs. 5, 6 are in the 200 series. The second two digits, where appropriate, relate to similar features of the head of Figs. 1, 2.

The third embodiment is different from the second embodiment in that it permits the application of opposite polarity voltages to the terminals of the coils. Specifically, conductor 220 has a terminal pad 220c similar to pad 20c of the head of the first embodiment. The centers of coils 218, 220 are connected together by cup 220a which is also connected to collar 216, and thereby, to web 212. The outer end of coil 218 is terminated in an externally connectible terminal column 218d.

During operation of head 210, web 212 is electrically grounded, a positive voltage potential is applied to terminal pad 220c and a negative voltage potential is applied to terminal column 218d. Current flows clockwise in the two coils when viewed from the top of Fig. 6 along axis 226. So long as the electrical voltage potential of web 212 is intermediate that of the voltage applied to terminal pad 220c and terminal column 218d, current will flow in the two coils in the same direction and therefore cooperate to generate flux in head 210.

It can therefore be seen that head 10 has parallel multiple coils which provide redundant coils. For a given current flow, the same magnetomotive force is developed in head 10 whether one or both of coils 18, 20 operate.

The second and third embodiments described with reference to Figs. 3-6 achieve the same amount of magnetomotive force in the read/write heads with approximately half the current required with a single coil head. This makes it possible to drive such heads with power sources having lower power outputs.

Alternatively, the flux generated in these heads by a given amount of current is approximately doubled without increasing the size of the head in the plane of the head as compared to a single coil head. Thus, head density within an array can be maintained while increasing efficiency.

While the invention has been particularly shown and described with reference to the foregoing preferred embodiments, it will be understood by those skilled in the art that other changes in form and detail may be made therein without departing from the spirit and scope of the invention as defined in the following claims.

CLAIMS:

1. A thin-film electromagnetic read/write head comprising

selectively excitable, thin-film magnetic pole means including first and second pole portions extending in a magnetically gapped manner, said pole means being excitable to produce a pair of opposite polarity magnetic poles, and

plural electrically and magnetically spaced thin-film spiral coil means operatively connected to and sandwiched between said pole portions for cooperatively exciting the same, said coil means being spaced from said first and second poles.

2. A thin-film, electromagnetic read/write head comprising

selectively excitable, thin-film magnetic pole means including first and second pole portions with one pole portion extending in a magnetically gapped manner through an aperture in the other pole portion, said pole means being excitable to produce a pair of opposite-polarity magnetic poles, and

plural electrically and magnetically spaced thin-film spiral coil means operatively connected to and sandwiched between said pole portions for cooperatively exciting the same, said coil means being spaced from said first and second poles, and from said aperture.

3. A thin-film, electromagnetic read/write head comprising

a thin-film magnetic web having an aperture opening to opposite faces of the web,

a thin-film blanket of magnetic material including one portion spaced from said aperture in magnetic-circuit contact with and distributed adjacent one face of said web, and another portion extending in a magnetically gapped manner through said aperture with a facial expanse which is substantially flush with the other face of said web, and

plural electrically and magnetically spaced thin-film spiral coil means spaced from said aperture, and sandwiched between and encompassed by said web and blanket in a manner capable, when energized, of cooperatively inducing magnetic flux in the web and blanket to produce on said web's said other face, in the region of said aperture, opposite-polarity magnetic poles.

4. The head of claim 3, wherein said coil means are connected electrically in parallel.

5. The head of claim 3, wherein said web is electrically conductive and is joined to one end of each of said coil means for cooperating electrically conductively with each of said coil means.

6.   The head of claim 5, wherein said coil means are generally parallel and are distributed generally with circumferential symmetry relative to said aperture, said coils having windings curving in the same direction when viewed along the axis of curvature.

7.   The head of claim 3, wherein said coil means are connected electrically directly in series.

8.   The head of claim 7, wherein said coil means include a pair of coils and wherein said web is electrically conductive and is joined electrically to the joined end of said coils.

9.   The head of claim 8, wherein said coils are generally mechanically mutually parallel and are distributed generally with circumferential symmetry relative to said aperture, said coils having windings curving in opposite directions when viewed along the axis of curvature.

FIG.1

FIG.2

FIG.3

FIG.4

FIG.5

FIG.6

0147003

1/1

1/1

## DOCUMENTS CONSIDERED TO BE RELEVANT

| Category | Citation of document with indication, where appropriate, of relevant passages | Relevant to claim | CLASSIFICATION OF THE APPLICATION (Int. Cl. ³) |
|---|---|---|---|
| Y,D | US-A-4 414 554 (SPRINGER) <br> * Column 7, line 6 - column 8, line 47; claim 1; figures 5,6 * | 1-3 | G 11 B 5/31 |
| Y | PATENT ABSTRACTS OF JAPAN, vol. 7, no. 168, 23rd July 1983, page (P 212)(1313); & JP-A-58-73011 (HITACHI) 02-05-1983 * Abstract * | 1-3 | |
| A | PATENT ABSTRACTS OF JAPAN, vol. 6, no. 145, 4th August 1982, page (P-132)(1023); & JP-A-57-66523 (HITACHI) 22-04-1982 | | |
| A | IEEE TRANSACTIONS ON MAGNETICS, vol. MAG-17, no. 4, July 1981, New York, USA; A.M. GINDI et al. "Design considerations for the DASTEK 4830 disk drive", pages 1383-1386 * Figure 2 * | 1 | TECHNICAL FIELDS SEARCHED (Int. Cl. ³) <br><br> G 03 G 19/00 <br> G 11 B 5/00 |

The present search report has been drawn up for all claims

| Place of search | Date of completion of the search | Examiner |
|---|---|---|
| BERLIN | 14-02-1985 | WIBERGH S.R. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503 03 82